# EUROPÄISCHE PATENTSCHRIFT

(11) **EP 3 645 646 B1**
(45) Veröffentlichungstag und Bekanntmachung des Hinweises auf die Patenterteilung: **11.10.2023**
(21) Anmeldenummer: 18736841.0
(22) Anmeldetag: 26.06.2018
(51) Int. Cl.: C09J 7/38, C08K 5/00, C09J 133/04

(54) **VERFAHREN ZUR HERSTELLUNG EINES KLEBEBANDES**
METHOD FOR PRODUCING AN ADHESIVE TAPE
PROCÉDÉ DE PRODUCTION D'UN RUBAN ADHÉSIF

(30) Priorität: 27.06.2017 DE 102017114256
(43) Veröffentlichungstag der Anmeldung: 06.05.2020
(73) Patentinhaber: Certoplast Technische Klebebänder GmbH, 42285 Wuppertal (DE)
(72) Erfinder: MEIER, Thorsten, 40699 Erkrath (DE)
(74) Vertreter: Andrejewski - Honke Patent- und Rechtsanwälte Partnerschaft mbB
(86) Internationale Anmeldenummer: PCT/EP2018/067144
(87) Internationale Veröffentlichungsnummer: WO 2019/002312

(56) Entgegenhaltungen:
- EP-A1- 1 725 626
- EP-A1- 2 818 527
- EP-A1- 2 933 299
- EP-A2- 2 806 005
- WO-A1-2017/045726
- JP-A- 2012 140 497
- US-A1- 2009 272 950
- Anonymous: "Lambert-Beersches Gesetz", RÖMPP, 1 June 2011 (2011-06-01), pages 1-2, XP093028779, Retrieved from the Internet: URL:https://roempp.thieme.de/lexicon/RD-12 -00270 [retrieved on 2023-03-03]

## Beschreibung

Die Erfindung betrifft ein Verfahren zur Herstellung eines Klebebandes, insbesondere eines Wickelbandes zum Ummanteln von Kabeln in Automobilen, wonach ein bandförmiger Träger mit einer UV-vernetzbaren Klebebeschichtung ausgerüstet wird, wonach ferner die Klebebeschichtung neben einem Haftklebstoff auf Acrylatbasis mit eingelagerten Fotoinitiatoren zumindest einen Zusatz aufweist, und wonach die Fotoinitiatoren durch Bestrahlung mit einer im Bereich ihrer Aktivierungslänge emittierenden UV-Lichtquelle zur Vernetzung aktiviert werden. Die in die Klebebeschichtung eingelagerten Fotoinitiatoren können einpolymerisiert, eingemischt oder sonst wie in die Klebebeschichtung eingebracht werden.

Ein Verfahren des eingangs beschriebenen Aufbaus wird beispielhaft in der EP 1 548 080 B1 beschrieben. Hier geht es insgesamt um ein technisches Klebeband, welches für den Einsatz im Bauwesen geeignet sein soll. Zu diesem Zweck wird mit einem hohen spezifischen Flächengewicht von mindestens 100 g/m² für die Klebebeschichtung gearbeitet. Durch die eingestellten Parameter soll eine besonders gute Haftung auch auf rauen Untergründen zur Verfügung gestellt werden.

Im Rahmen der EP 2 806 005 A2 geht es um eine UV-vernetztbare Klebemasse die neben einem Polyakrylat mindestens ein Terpenphenolharz enthält. Dadurch soll die Abflecktendenz einer mit einer solchen UV-vernetzbaren Klebemasse bewirkten Verklebung verringert werden.

Die EP 2 933 299 A1 beschäftigt sich mit einer Haftklebemasse sowie einem Verfahren zu ihrer Herstellung. Außerdem geht es um die Herstellung von zugehörigen Haftmitteln wie Kabelwickelbändern.

Darüber hinaus wird im Rahmen der WO 2017/045 726 A1 ein Klebeband und insbesondere Wickelband beschrieben, welches mit einem textilen Träger ausgerüstet ist. Auf einer Seite ist eine Haftklebebeschichtung vorgesehen, die ein UV-vernetztbares Acrylat beinhaltet. Dadurch soll insgesamt die Tendenz zum Flagging reduziert werden.

Im Rahmen der US 2017/0081566 A1 geht es um UV-vernetzbare Acrylate, die neben dem Haftklebstoff zusätzlich eingelagerte Fotoinitiatoren sowie einen als Harzbeimischung ausgebildeten Zusatz aufweisen. Außerdem werden entsprechend ausgerüstete Haftklebebänder bzw. PSA (pressure-sensitive adhesive)-Klebebänder beschrieben.

UV-vernetzbare Klebebeschichtungen verfügen typischerweise neben dem Haftklebstoff auf Acrylatbasis mit eingelagerten Fotoinitiatoren zusätzlich noch über einen Zusatz, der im Allgemeinen die Haftung auf dem Träger erhöhen soll. Das gilt insbesondere für unpolare Oberflächen von Trägern. Solche Zusätze stören jedoch unter Umständen die anschließende Vernetzung. Tatsächlich wird der bandförmige Träger typischerweise zunächst mit der Klebebeschichtung ausgerüstet und anschließend mit der UV-Lichtquelle bestrahlt.

Dabei sorgt die UV-Lichtquelle primär dafür, dass die Fotoinitiatoren im Bereich ihrer Aktivierungswellenlänge mit der erforderlichen UV-Dosis bestrahlt werden, damit als Folge hiervon die gewünschte Vernetzung der Klebebeschichtung erfolgt. Tatsächlich sorgen die in den Haftklebstoff auf Acrylatbasis eingelagerten Fotoinitiatoren dafür, dass die Acrylatpolymere insgesamt zu einem relativ weitmaschigen Netzwerk verknüpft werden.

Um die Vernetzung und folglich die Aktivierung der Fotoinitiatoren nicht zu gefährden, wird im Stand der Technik im Rahmen einer Veröffentlichung der Firma BASF zum Thema "UV-Curable acrylic hotmelts for PSAs" mit dem Veröffentlichungsdatum 22. Mai 2001 betont, dass aus diesem Grund der Zusatz zu dem Haftklebstoff im Bereich der relevanten Aktivierungswellenlänge der Fotoinitiatoren nicht oder praktisch nicht absorbieren darf. Andernfalls soll nicht genügend UV-C-Licht im Beispielfall in die Klebebeschichtung eindringen können, um die zuvor beschriebene Vernetzung vollflächig zu gewährleisten. Mit UVC-Licht ist im vorliegenden Fall ferne UV-Strahlung gemeint, welche im Wellenlängenbereich von 200 nm bis 280 nm angesiedelt ist. Mittleres UV-Licht bzw. UVB-Strahlung erstreckt sich demgegenüber in einem Wellenlängenbereich von 280 nm bis 315 nm. Nahes UV-Licht bzw. Schwarzlicht (UVA) wird demgegenüber dem Wellenlängenbereich von 315 nm bis 380 nm zugeordnet. Als Folge dieser Vorgabe haben sich in der Praxis lediglich Zusätze neben dem Haftklebstoff auf Acrylatbasis mit den eingelagerten Fotoinitiatoren durchgesetzt, die im Bereich der Aktivierungswellenlänge praktisch nicht absorbieren.

Ein in diesem Zusammenhang marktgängiges Produkt wird unter der Kennzeichnung Foral 85 oder Foral 105 vertrieben. In beiden Fällen handelt es sich um Harzbeimischungen auf Abietinsäureesterbasis, sofern diese hydriert sind und folglich die geforderte Durchlässigkeit im Bereich der Aktivierungswellenlänge aufweisen. Nachteilig an den zuvor beschriebenen Harzbeimischungen ist deren Preis, welcher teilweise sogar denjenigen des eigentlichen Haftklebstoffes auf Acrylatbasis mit den eingelagerten Fotoinitiatoren überschreiten kann. Hier will die Erfindung insgesamt Abhilfe schaffen.

Der Erfindung liegt das technische Problem zugrunde, ein derartiges Verfahren zur Herstellung eines Klebebandes so weiter zu entwickeln, dass die Herstellungskosten signifikant reduziert sind.

Zur Lösung dieser technischen Problemstellung ist ein Verfahren nach Anspruch 1 vorgesehen.

Im Rahmen der Erfindung wird zunächst einmal eine bestimmte Klasse von Zusätzen angesprochen und beansprucht, die sich durch eine bestimmte Durchlässigkeit im UV-Bereich auszeichnen. Tatsächlich handelt es sich bei der angegebenen Extinktion mit dem Formelzeichen E um die Verminderung der Intensität des beispielsweise in einem Fotometer gemessenen Lichtes beim Durchgang durch eine entsprechende Probe des Zusatzes, was auch als Probendurchlässigkeit bezeichnet wird. Im Gegensatz zum Stand der Technik beispielsweise im Rahmen des zuvor bereits angesprochenen Aufsatzes "UV-Curable acrylic hotmelts for PSAs" werden erfindungsgemäß Zusätze bzw. Harzbeimischungen ausdrücklich zugelassen, die im Bereich der Aktivierungswellenlänge der Fotoinitiatoren im Haftklebstoff mit einer gewissen Absorption ausgerüstet sind. Das drücken die Angaben für die Extinktion im Bereich zwischen 0,1 und 0,7 aus.

Demgegenüber liegt die Extinktion von beispielsweise Foral 85 im Bereich einer typischen Aktivierungswellenlänge von Fotoinitiatoren zwischen 250 nm und 260 nm bei nahezu Null. Die Erfindung geht nun jedoch von der Erkenntnis aus, dass die UV-Lichtquelle die Klebebeschichtung mit einer UV-Dosis von mehr als 15 mJ/cm² insbesondere mit einer UV-Dosis von mehr als 20 mJ/cm² bestrahlt. Im Regelfall ist die UV-Dosis im Bereich von 50 mJ/cm² und insbesondere 150 mJ/cm² bis zu 500 mJ/cm² angesiedelt. Vorzugsweise lassen sich mit Hilfe der UV-Lichtquelle Bestrahlungsdosen im Bereich von 200 mJ/cm² bis 400 mJ/cm² realisieren.

Dies alles gelingt dann besonders günstig, wenn als UV-Lichtquelle eine solche auf LED-Basis eingesetzt wird. Im Gegensatz zu den in der Praxis typischerweise eingesetzten Quecksilber-Dampflampen mit scharfen Spektrallinien im UV-Bereich zeichnen sich Emissionsspektren von UV-LEDs durch eine viel breitere spektrale Verteilung aus. Dadurch kann selbst bei gleichbleibender UV-Dosis eine insgesamt wirksamere Vernetzung erzielt werden. Das gilt zumindest im für die Vernetzung besonders relevanten Bereich von beispielsweise 250 nm bis 260 nm, wenn ein Acrylatkleber wie beispielsweise ein solcher mit dem Markennamen "AcResin" zum Einsatz kommt.

Umgekehrt gelingt es gerade mit einer UV-Quelle auf LED-Basis, dass die in den Haftklebstoff auf Acrylatbasis eingelagerten Fotoinitiatoren auch dann noch einwandfrei aktiviert werden, wenn ein Teil der UV-Strahlung seitens des Zusatzes absorbiert wird. Das heißt, durch insbesondere den Rückgriff auf eine UV-Lichtquelle auf LED-Basis lassen sich an dieser Stelle auch Zusätze zur Erhöhung der Haftung auf dem Träger dem Haftklebstoff auf Acrylatbasis mit den eingelagerten Fotoinitiatoren beimischen, die im Bereich der Aktivierungswellenlänge eine nicht zu vernachlässigende Absorption aufweisen. Da derartige Zusätze bzw. Harzbeimischungen zur Erhöhung der Haftung auf dem Träger deutlich kostengünstiger als beispielsweise die zuvor genannten Referenzprodukte Foral 85 oder Foral 105 hergestellt werden können, lassen sich die solchermaßen produzierten Klebebänder mit signifikanten Kostenvorteilen gegenüber dem Stand der Technik realisieren. Hierin sind die wesentlichen Vorteile zu sehen.

Erfindungsgemäß wird die Harzbeimischung auf Basis eines lediglich teilhydrierten Abietinsäureesters hergestellt. Durch die Teilhydrierung, also lediglich teilweise Addition von Wasserstoff, können solche Harzbeimischungen im Vergleich zu vollhydrierten Produkten wie Foral 85 oder Foral 105 mit deutlichen Kostenvorteilen hergestellt werden. Zugleich zeichnen sich solche Harzbeimischungen auf Basis eines lediglich teilhydrierten Abietinsäureesters durch ihre völlige Kompatibilität mit Acrylatpolymeren aus. Ebenso verfügen sie über eine hohe Temperaturbeständigkeit, weshalb sie für den Einsatz zur Herstellung von Wickelbändern zum Ummanteln von Kabeln in Automobilen mit den dort oftmals beobachteten erhöhten Temperaturen von 60 °C, 80 °C und mehr in der Praxis prädestiniert sind. Tatsächlich werden in diesem Zusammenhang Gebrauchstemperaturen bis zu 150 °C gefordert. Die zu testende Überlasttemperatur beträgt (für 6 Stunden) sogar 200 °C. Zugleich sorgt ihre Kohäsionsfähigkeit dafür, dass die mit dem entsprechenden Zusatz ausgerüstete Klebebeschichtung einwandfrei auch auf unpolaren Trägern haftet und folglich die Beschichtung einfach und schnell gelingt. Zu diesem Zweck ist der Zusatz in der Regel in einer Grammatur von mindestens 5 Gew.-% oder zumindest 10 Gew.-% in der Klebebeschichtung vorhanden. Außerdem wird regelmäßig eine Obergrenze für den Zusatz von 30 Gew.-% und insbesondere bis zu 40 Gew.-% in der Klebebeschichtung realisiert.

Erfindungsgemäß wird in diesem Zusammenhang mit einer Aktivierungswellenlänge zwischen 250 nm und 260 nm gearbeitet. Es kann aber auch mit Aktivierungswellenlängen bis hin zu 320 nm gearbeitet werden, und zwar je nach eingesetztem Fotoinitiator. Das heißt, an dieser Stelle ist ein Bereich der Aktivierungswellenlänge abhängig vom jeweiligen Fotoinitiator denkbar, welcher von 250 nm bis 320 nm, vorzugsweise von 250 nm bis 300 nm und ganz besonders bevorzugt von 250 nm bis 260 nm reicht. Dieser angegebene Bereich der Aktivierungswellenlänge empfiehlt sich, da als Haftklebstoff üblicherweise ein UV-reaktives lösungsmittelfreies Acrylsäureester-Copolymer mit jeweils eingelagerten Fotoinitiatoren zum Einsatz kommt. Tatsächlich sind solche Haftklebstoffe beispielsweise unter der Markenkennzeichnung acResin verfügbar und werden von der Firma BASF angeboten. Das gilt selbstverständlich nur beispielhaft.

Die Klebebeschichtung wird mit einem Auftragsgewicht von mehr als 15 g/m², insbesondere um mehr als 20 g/m² und vorzugsweise mehr als 50g/m² auf den Träger aufgebracht. Im Maximum liegt das Auftragsgewicht bei 200g/m², und insbesondere bevorzugt bei bis zu 90g/m². Der Auftrag erfolgt im Allgemeinen durch eine Schmelzklebebeschichtung bei Temperaturen zwischen ca. 120 °C und 140 °C und vorzugsweise bei bis zu einer Temperatur von 150 °C. Anschließend an den Auftrag wird die Klebebeschichtung mit Hilfe der UV-Lichtquelle vernetzt. Maßgeblich für die Vernetzung ist dabei der Wellenlängenbereich unterhalb von ca. 340 nm, insbesondere jener zwischen 220 nm und 280 nm. Im beschriebenen Beispielfall des Schmelzklebstoffes AcResin werden primär Emissionswellenlängen der UV-Lichtquelle zwischen 250 m und 260 nm benötigt.

Die Leistung der UV-Lichtquelle liegt dabei im Bereich von 100 W/cm bis 200 W/cm. Die Durchlaufgeschwindigkeit des mit der Klebebeschichtung ausgerüsteten Trägers unterhalb der UV-Lichtquelle kann zwischen beispielsweise 10 m/min und 100 m/min oder noch mehr eingestellt werden.

Die Fotoinitiatoren liegen in der Klebebeschichtung erfindungsgemäß in einer Grammatur von mindestens 0,05 Gew.-% vor. Vorzugsweise wird eine Grammatur von 0,2 Gew.-% bis 5 Gew.-% und insbesondere zwischen 0,2 Gew.-% bis 2 Gew.-% beobachtet. Für den Zusatz bzw. die Harzbeimischung in der Klebebeschichtung sieht die Erfindung eine Grammatur von bis zu 30 Gew.-% bzw. bis zu 40 Gew.-% in der Klebebeschichtung vor. Der Zusatz beträgt im Minimum 5 Gew.-% in der Klebebeschichtung. Außerdem können in diesem Zusammenhang Fotoinitiatoren zum Einsatz kommen, wie sie grundsätzlich in der WO 2016/186877 A1 und insbesondere in der DE 695 15 310 T2 beschrieben werden.

Bei dem Träger kann es sich grundsätzlich um jedweden denkbaren Träger handeln, beispielsweise einen Träger auf Basis von Papier oder Folie. Besonders bevorzugt kommen an dieser Stelle textile Flächengebilde zum Einsatz, die mit einem Flächengewicht zwischen 50 g/m² und 250 g/m² ausgerüstet sind. Vorzugsweise ist das Flächengewicht im Bereich zwischen 15 g/m² und insbesondere 20 g/m² bis zu 250 g/m² angesiedelt. Besonders bevorzugt liegt das Flächengewicht im Bereich zwischen 70 g/m² und 200 g/m². Als denkbare textile Flächengebilde haben sich Vliese, insbesondere Polyestervliese, aber auch Gewebe, insbesondere Polyestergewebe, Polyamidgewebe sowie Mischformen als besonders günstig erwiesen.

Im Ergebnis wird ein Verfahren zur Herstellung eines Klebebandes zur Verfügung gestellt, welches sich durch besondere Kostenvorteile gegenüber dem bisherigen Stand der Technik auszeichnet. Diese Kostenvorteile werden primär aufgrund der Tatsache beobachtet, dass ausdrücklich eine Harzbeimischung als Bestandteil der Klebebeschichtung zur Erhöhung der Haftung auf dem Träger eingesetzt wird, die im relevanten Bereich der Aktivierungswellenlänge für die Fotoinitiatoren eine nicht zu vernachlässigende Absorption aufweist. Tatsächlich wird für den Zusatz im Bereich der Aktivierungswellenlänge der Fotoinitiatoren eine Extinktion von 0,1 bis 0,7 beobachtet, was deutlich über Vergleichswerten bisher eingesetzter Harzbeimischungen wie beispielsweise Foral 85 angesiedelt ist. Als Folge hiervon können kostengünstige Zusätze zum Einsatz kommen, die typischerweise auf Basis eines lediglich teilhydrierten Abietinsäureesters hergestellt werden. Dadurch lassen sich die Produktionskosten signifikant verringern. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine Vorrichtung zur Durchführung des erfindungsgemäßen Verfahrens schematisch,
- Fig. 2: ein Absorptionsspektrum bzw. die gemessene Extinktion E über der Wellenlänge für eine in der Praxis häufig eingesetzte Harzbeimischung (Foral 85),
- Fig. 3: einen im Rahmen der Erfindung eingesetzten alternativen Zusatz 1 und dessen Absorptionsspektrum bzw. die Extinktion E über der Wellenlänge,
- Fig. 4: ein vergleichbares Diagramm wie die Fig. 3 für einen Zusatz 2 und
- Fig. 5: ein Absorptionsspektrum bzw. erneut die Extinktion über der Wellenlänge unter Berücksichtigung des Haftklebstoffes auf Acrylatbasis mit den eingelagerten Fotoinitiatoren ohne Harzbeimischung (durchgezogen) und mit Harzbeimischung (gestrichelt).

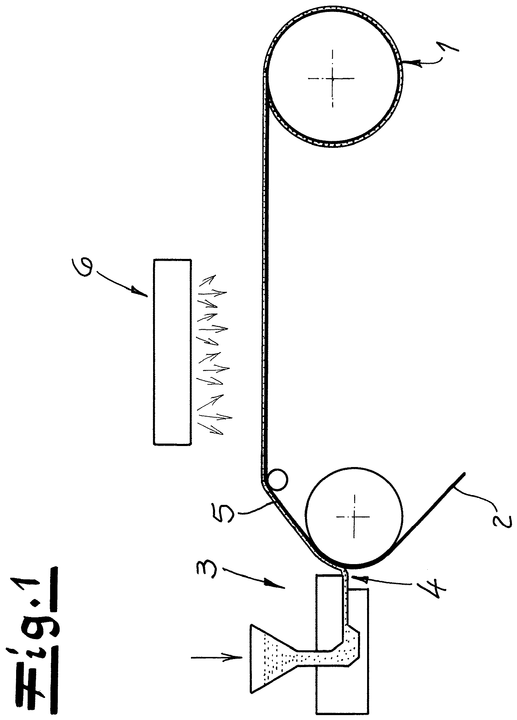

In der Fig. 1 ist eine Vorrichtung dargestellt, mit deren Hilfe ein Klebeband 1 hergestellt werden kann. Zu diesem Zweck wird ein Träger 2 einer Beschichtungsanlage 3 für Schmelzklebstoff zugeführt. In der Beschichtungsanlage 3 für den Schmelzklebstoff befindet sich der Schmelzklebstoff auf einer Temperatur von ca. 100 °C bis 150 °C und kann über eine ausgangsseitige Düse 4 der Beschichtungsanlage 3 auf den an der Düse 4 vorbei bewegten Träger 2 aufgebracht und der Träger 2 beschichtet werden.

Bei dem Träger 2 handelt es sich um einen bandförmigen Träger 2, der als textiles Flächengebilde ausgebildet ist und über ein Flächengewicht zwischen 50 g/m² und 250 g/m² verfügt. Nach der Beschichtung des bandförmigen Trägers 2 mit einer auf diese Weise realisierten Klebebeschichtung 5 wird die Klebebeschichtung 5 mit Hilfe einer oberhalb des durchlaufenden beschichteten Trägers 2 angeordneten UV-Lichtquelle 6 vernetzt. Dabei versteht es sich, dass die Klebebeschichtung 5 auf der UV-Lichtquelle 6 zugewandten Seite des Trägers 2 vorgesehen ist. Bei der Lichtquelle 6 handelt es sich um eine solche, die auf LED-Basis ausgelegt ist. Tatsächlich sind an dieser Stelle eine Vielzahl an LEDs bzw. UV-LEDs realisiert. Grundsätzlich kann die UV-Lichtquelle 6 aber auch auf beispielsweise eine Quecksilber-Dampflampe zurückgreifen. Das ist jedoch nicht dargestellt.

Der mit der Klebebeschichtung 5 ausgerüstete Träger 2 bewegt sich unterhalb der UV-Lichtquelle 6 mit einer Geschwindigkeit von 10 m/min bis 100 m/min oder mehr. Die Klebebeschichtung 5 wird dabei seitens der UV-Lichtquelle 6 mit einer UV-Dosis im Bereich von 150 mJ/cm² bis 500 mJ/cm² bestrahlt. Die UV-Lichtquelle 6 emittiert dabei unter anderem bzw. größtenteils im Bereich der Aktivierungswellenlänge für die in die Klebebeschichtung 5 eingelagerten Fotoinitiatoren. Die Aktivierungswellenlänge liegt primär im Bereich zwischen 250 nm und 260 nm, kann allerdings je nach eingesetztem Fotoinitiator bis zu 320 nm reichen.

Bei der Klebebeschichtung 5 handelt es sich um eine solche, die neben einem Haftklebstoff auf Acrylatbasis mit den eingelagerten Fotoinitiatoren zumindest einen Zusatz aufweist. Als Zusatz greift die Erfindung auf eine Harzbeimischung auf Basis eines lediglich teilhydrierten Abietinsäureesters zurück. Nach der Ausrüstung des Trägers 2 mit der Klebebeschichtung 5 kann das solchermaßen hergestellte Klebeband 1 aufgewickelt oder beispielsweise in Längsrichtung geschnitten werden, wenn an dieser Stelle als Träger 2 eine Gewebebahn der Beschichtungsanlage 3 zugeführt wird. Das ist im Einzelnen bekannt.

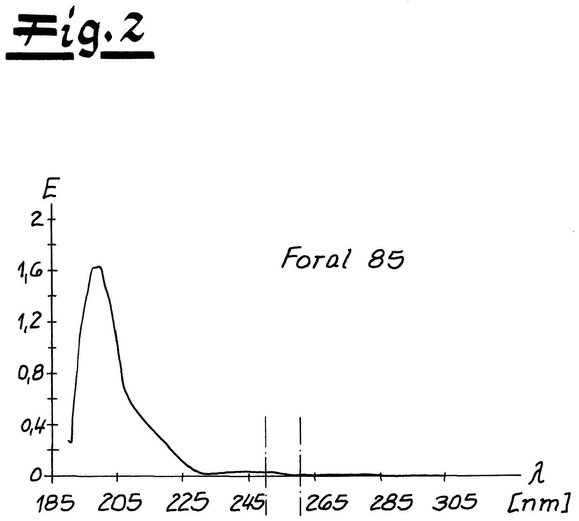

In der Fig. 2 ist nun ein Absorptionsspektrum eines in der Praxis und nach dem Stand der Technik eingesetzten Zusatzes bzw. einer Harzbeimischung dargestellt. Hierbei handelt es sich um ein Harz auf Abietinsäureesterbasis, welches hydriert worden ist und unter dem Markennamen Foral 85 vertrieben wird. Man erkennt, dass im für die Aktivierung der Fotoinitiatoren innerhalb der Klebebeschichtung 5 relevanten Bereich der Aktivierungswellenlänge zwischen 250 nm und 260 nm, dargestellt durch entsprechende Grenzen, die Extinktion E nahezu Null ist, folglich die bekannte Harzbeimischung Foral 85 nach dem Stand der Technik praktisch in diesem Bereich vollständig durchlässig bzw. transparent ausgelegt ist und nicht absorbiert.

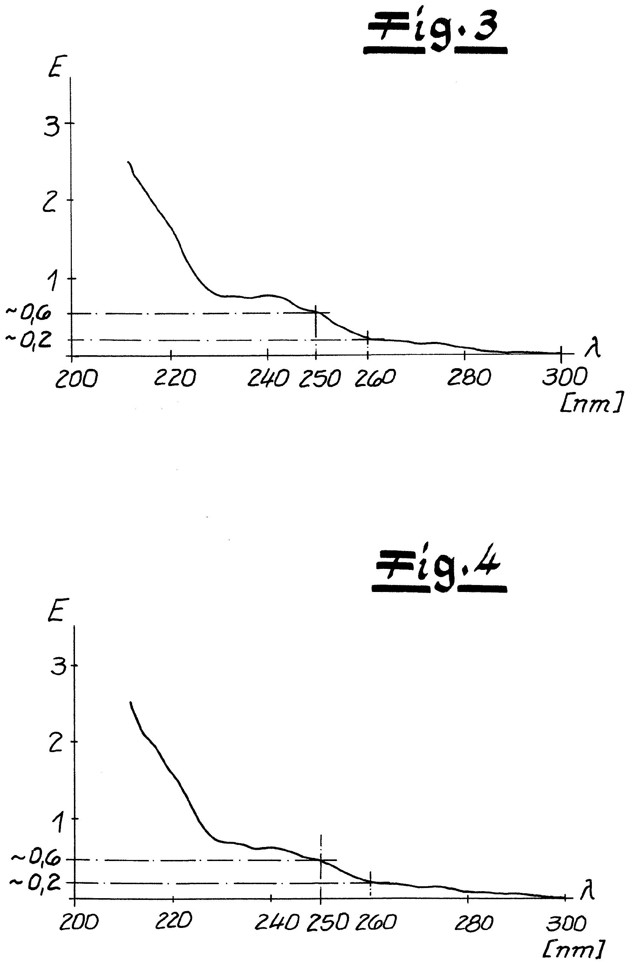

Demgegenüber weisen die in den Fig. 3 und 4 dargestellten Harzbeimischungen der Erfindung auf Basis des lediglich teilhydrierten Abietinsäureesters im relevanten Bereich der Aktivierungswellenlänge zwischen 250 nm und 260 nm Werte für die Extinktion E von ca. 0,6 bei 250 nm und ca 0,2 bei 260 nm auf. In der Fig. 3 ist der Zusatz 1 bzw. dessen Extinktion E über der Wellenlänge dargestellt. Die Fig. 4 zeigt ein vergleichbares Diagramm wie die Fig. 3 für den Zusatz 2. Das heißt, der betreffende Zusatz 1 oder 2 nach der Erfindung ist im Bereich der Aktivierungswellenlänge zwischen 250 nm und 260 nm der Fotoinitiatoren der Klebebeschichtung 5 mit einer Extinktion E von 0,1 bis 0,7 bzw. 0,2 bis 0,6 ausgerüstet.

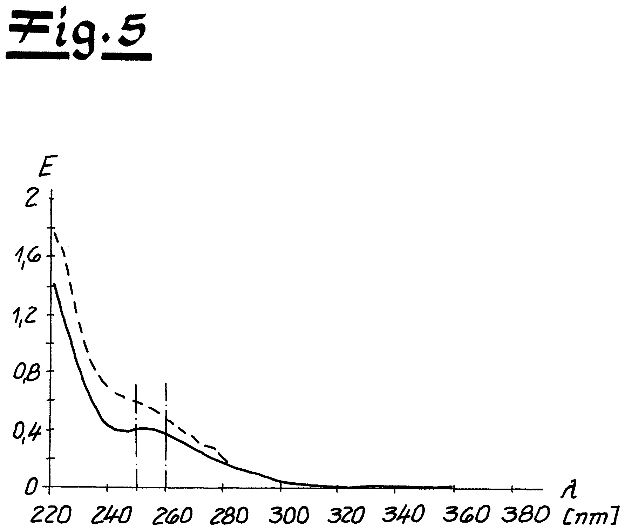

Die Fig. 5 zeigt schließlich einen Vergleich des UV-vernetzbaren Haftklebstoffes auf Acrylatbasis mit den eingelagerten Fotoinitiatoren und ohne Harzbeimischung (durchgezogen) mit dem gleichen Haftklebstoff unter Berücksichtigung der erfindungsgemäßen Harzbeimischung nach dem Zusatz 1 (gestrichelt). Man erkennt, dass wiederum im relevanten Bereich der Aktivierungswellenlänge zwischen 250 nm und 260 nm durch den Zusatz bzw. die Harzbeimischung auf Basis des lediglich teilhydrierten Abietinsäureesters die Extinktion gegenüber der Situation ohne Harzbeimischung und folglich die Absorption angestiegen ist. Gleichwohl wird im Rahmen der Erfindung nach wie vor und unverändert eine einwandfreie Vernetzung der eingelagerten Fotoinitiatoren in den Haftklebstoff 5 beobachtet und realisiert. Das lässt sich im Wesentlichen auf das im Vergleich zu beispielsweise Quecksilber-Dampflampen homogenere Emissionsspektrum der eingesetzten UV-LEDs einerseits und die geringfügige gesteigerte UV-Dosis im Vergleich zum Stand der Technik nach der EP 1 548 080 B1 andererseits primär zurückführen.

Die Zusätze 1 und 2 bezeichnen jeweils Harzbeimischungen auf Basis eines teilhydrierten Abietinsäureesters. Der Zusatz 1 korrespondiert zum Produkt YT311 der Firma Yser während der Zusatz 2 das Produkt YT321 der genannten Unternehmung bezeichnet.

## Patentansprüche

1. Verfahren zur Herstellung eines Klebebandes (1), insbesondere eines Wickelbandes zum Ummanteln von Kabeln in Automobilen, wonach
- ein bandförmiger Träger (2) mit einer UV-vernetzbaren Klebebeschichtung (5) mit einem Auftragsgewicht von 15 g/m² bis 250 g/m² ausgerüstet wird, wonach ferner
- die Klebebeschichtung (5) neben einem Haftklebstoff auf Acrylatbasis mit einpolymerisierten oder eingemischten Fotoinitiatoren zumindest einen Zusatz aufweist, wobei
- die Fotoinitiatoren in einer Grammatur von 0,05 Gew.-% bis 5 Gew.-% und der als Harzbeimischung ausgebildete Zusatz in einer Grammatur von bis zu 40 Gew.-% jeweils in der Klebebeschichtung (5) vorliegen, wonach darüber hinaus
- die Fotoinitiatoren durch Bestrahlung mit einer im Bereich ihrer Aktivierungswellenlänge zwischen 250 nm und 320 nm, vorzugsweise zwischen 250 nm und 260 nm, emittierenden UV-Lichtquelle (6) zur Vernetzung aktiviert werden, wonach weiter
- der Zusatz zumindest im Bereich der Aktivierungswellenlänge der Fotoinitiatoren eine Extinktion (E) von 0,1 bis 0,7 aufweist, und wonach
- der als Harzbeimischung ausgebildete Zusatz auf Basis eines lediglich teilhydrierten Abietinsäureesters hergestellt sowie
- als UV-Lichtquelle (6) eine solche auf LED-Basis eingesetzt wird

2. Verfahren nach Anspruch 1, **dadurch gekennzeichnet, dass** der Zusatz im Bereich der Aktivierungswellenlänge der Fotoinitiatoren eine Extinktion E zwischen 0,2 und 0,6 aufweist.

3. Verfahren nach Anspruch 1 oder 2, **dadurch gekennzeichnet, dass** die UV-Lichtquelle (6) die Klebebeschichtung mit einer Dosis von 15 mJ/cm² bis 400 mJ/cm² (5) bestrahlt.

4. Verfahren nach einem der Ansprüche 1 bis 3, **dadurch gekennzeichnet, dass** der Träger (2) als textiles Flächengebilde mit einem Flächengewicht zwischen 15 g/m² bis 250 g/m², vorzugsweise zwischen 50 g/m² und 200 g/m² ausgelegt ist.

5. Verfahren nach einem der Ansprüche 1 bis 4, **dadurch gekennzeichnet, dass** die Fotoinitiatoren in einer Grammatur von 0,2 Gew.-% bis 5 Gew.-% in der Klebebeschichtung (5) vorgesehen werden.

6. Verfahren nach einem der Ansprüche 1 bis 5, **dadurch gekennzeichnet, dass** der Zusatz in einer Grammatur von mindestens 5 Gew.-% und bis zu 40 Gew.-% in der Klebebeschichtung (5) vorhanden ist.

## Claims

1. Method for the production of an adhesive tape (1), in particular a wrapping tape for the wrapping of cables in automobiles, whereupon
- a tape-form substrate (2) is provided, with a UV-crosslinkable adhesive coating (5) with an application weight of 15 g/m² to 250 g/m², whereupon furthermore
- the adhesive coating (5) has, in addition to an acrylate-based pressure-sensitive adhesive with polymerised or mixed-in photoinitiators, at least one additive, wherein
- the photoinitiators are present at a grammage of between 0.05% by weight and 5% by weight, and the additive in the form of a resin admixture is present at a grammage of up to 40% by weight, in each case in the adhesive coating (5), whereupon in addition
- for purposes of crosslinkage the photoinitiators are activated by irradiation with a UV-light source (6) emitting in the range of their activation wavelength of between 250 nm and 320 nm, preferably of between 250 nm and 260 nm, whereupon furthermore
- the additive has an extinction (E) of 0.1 to 0.7, at least in the range of the activation wavelength of the photoinitiators, and whereupon
- the additive, which is in the form of a resin admixture, is produced on the basis of an only partially hydrogenated abietic acid ester, and
- as the UV-light source (6), one such that is LED-based is used.

2. Method according to Claim 1, **characterised in that**, the additive has an extinction E between 0.2 and 0.6 in the range of the activation wavelength of the photoinitiators.

3. Method according to Claim 1 or 2, **characterised in that**, the UV-light source (6) irradiates the adhesive coating with a dose of between 15 mJ/cm² and 400 mJ/cm² (5).

4. Method according to one of the Claims 1 to 3, **characterised in that**, the substrate (2) is designed as a textile fabric with a weight per unit area of between 15 g/m² and 250 g/m², preferably of between 50 g/m² and 200 g/m².

5. Method according to one of the Claims 1 to 4, **characterised in that**, the photoinitiators are provided at a grammage of between 0.2% and 5% by weight in the adhesive coating (5).

6. Method according to one of the Claims 1 to 5, **characterised in that**, the additive is present at a grammage of at least 5% by weight, and up to 40% by weight, in the adhesive coating (5).

## Revendications

1. Procédé de fabrication d'une bande adhésive (1), en particulier d'une bande d'enroulement pour envelopper des câbles dans le secteur automobile, selon lequel
- un support en forme de bande (2) est équipé d'un revêtement adhésif (5) réticulable aux UV avec un poids d'application de 15 g/m² à 250 g/m², selon lequel en plus
- le revêtement adhésif (5) comporte au moins un additif en plus d'une colle autoadhésive à base d'acrylate avec des photo-initiateurs copolymérisés ou incorporés, sachant que
- les photo-initiateurs sont présents respectivement dans le revêtement adhésif (5) dans un grammage de 0,05 %/poids à 5 %/poids et l'additif constitué sous la forme d'un mélange additionnel de résine dans un grammage allant jusqu'à 40 %/poids, selon lequel en plus
- les photo-initiateurs sont activés pour réticulation par rayonnement avec une source de lumière UV (6) émettant dans une plage de sa longueur d'ondes d'activation entre 250 nm et 320 nm, de préférence entre 250 nm et 260 nm, selon lequel par ailleurs,
- l'additif comporte au moins dans la plage de la longueur d'ondes d'activation des photo-initiateurs, une extinction (E) de 0,1 à 0,7, et selon lequel
- l'additif constitué sous la forme d'un mélange additionnel de résine est fabriqué sur la base d'un ester d'acide abiétique seulement en partie hydrogéné et
- une source de lumière UV à base de diodes électroluminescentes(DEL) (6) est utilisée comme telle.

2. Procédé selon la revendication 1, **caractérisé en ce que** l'additif comporte une extinction E entre 0,2 et 0,6 dans la plage de la longueur d'ondes d'activation des photo-initiateurs.

3. Procédé selon la revendication 1 ou 2, **caractérisé en ce que** la source de lumière UV (6) irradie le revêtement adhésif à une dose de 15 mJ/cm² jusqu'à 400 mJ/cm² (5).

4. Procédé selon l'une quelconque des revendications 1 à 3, **caractérisé en ce que** le support (2) est conçu sous la forme d'une structure de surface textile avec un grammage se situant entre 15 g/m² et 250 g/m², de préférence entre 50 g/m² et 200 g/m².

5. Procédé selon l'une quelconque des revendications 1 à 4, **caractérisé en ce que** les photo-initiateurs sont prévus dans le revêtement adhésif (5) dans un grammage de 0,2 %/poids à 5 %/poids.

6. Procédé selon l'une quelconque des revendications 1 à 5, **caractérisé en ce que** l'additif est présent dans le revêtement adhésif (5) dans un grammage d'au moins 5 %/poids et jusqu'à 40 %/poids.
